# EUROPÄISCHE PATENTSCHRIFT

(11) **EP 3 287 809 B1**
(45) Veröffentlichungstag und Bekanntmachung des Hinweises auf die Patenterteilung: **02.10.2019**
(21) Anmeldenummer: 17185293.2
(22) Anmeldetag: 08.08.2017
(51) Int. Cl.: G01S 17/42, G01S 7/481, G01S 7/486

(54) **VERFAHREN ZUM BETREIBEN EINES SCANNERS UND SCANNER**
METHOD FOR OPERATING A SCANNER AND SCANNER
PROCÉDÉ DE FONCTIONNEMENT D'UN DISPOSITIF DE BALEYAGE ET DISPOSITIF DE BALEYAGE

(30) Priorität: 16.08.2016 DE 102016115201
(43) Veröffentlichungstag der Anmeldung: 28.02.2018
(73) Patentinhaber: SICK AG, 79183 Waldkirch/Breisgau (DE)
(72) Erfinder: BÖHME, Max, 79112 Freiburg (DE); ENGLER, Michael, 79350 Sexau (DE)
(74) Vertreter: Manitz Finsterwald Patent- und Rechtsanwaltspartnerschaft mbB

(56) Entgegenhaltungen:
- EP-A1- 2 735 887
- EP-A1- 2 824 478
- EP-A2- 1 391 752
- DE-A1- 10 149 768

## Beschreibung

Die vorliegende Erfindung betrifft ein Verfahren zum Betreiben eines Scanners zur Überwachung eines zumindest zweidimensionalen Schutzfeldes, welches in mehrere zyklisch abtastbare Überwachungsfelder unterteilt ist, wobei der Scanner zumindest einen Lichtsender und zumindest einen Lichtempfänger umfasst.

Mit Scanner wird im vorliegenden Text ein als Scanner ausgestalteter Überwachungssensor bezeichnet. Ein derartiger Scanner kann beispielsweise als Laserscanner ausgebildet sein. Ein von einem Lichtsender, z.B. einem Laser oder dergleichen, erzeugter Sendelichtstrahl wird über eine Lichtablenkeinheit in das zu überwachende Schutzfeld gelenkt und dort von einem gegebenenfalls vorhandenen Objekt reflektiert oder remittiert. Das reflektierte bzw. remittierte Licht gelangt wieder zurück zu dem Scanner und wird dort von dem Lichtempfänger detektiert. Die Lichtablenkeinheit ist in der Regel schwenkbar bzw. drehbar ausgestaltet, so dass der von dem Lichtsender erzeugte Lichtstrahl ein der Schwenk- oder Drehbewegung entsprechendes Schutzfeld überstreicht. Wird ein von dem Lichtempfänger empfangenes reflektiertes Lichtsignal aus dem Schutzbereich empfangen, so kann aus der Winkelstellung der Ablenkeinheit auf die Winkellage des Objektes im Schutzfeld geschlossen werden.

Wenn der Scanner ein unzulässiges Objekt in dem Schutzfeld detektiert, so kann er beispielsweise ein entsprechendes Objekterfassungssignal ausgeben.

Derartige Scanner werden zum Beispiel bei beweglichen oder stationären Maschinen oder Fahrzeugen eingesetzt, bei denen aus Sicherheitsgründen ein Gefahrenbereich überwacht werden muss, der beim Betrieb der Maschine oder des Fahrzeugs weder von Personen noch von Gegenständen verletzt werden darf. Wenn durch den Scanner die Anwesenheit eines unzulässigen Objektes, beispielsweise eines Gliedmaßes einer Bedienperson, im Gefahrenbereich festgestellt wird, kann auf der Grundlage des Objekterfassungssignals ein Abschalten der Maschine, ein Anhalten des Fahrzeugs oder dergleichen bewirkt werden.

Allerdings können kleine Partikel wie in das Schutzfeld eindringender Staub, umherfliegende Späne, Regentropfen oder Schneeflocken zu einem unerwünschten Abschalten der Maschine oder Anhalten des Fahrzeugs führen. Derartige falsch-positive Objekterfassungssignale reduzieren die Verfügbarkeit der Maschine bzw. des Fahrzeugs.

Um diesen Nachteil zu vermeiden, kann beispielsweise das Konzept der sogenannten Mehrfachauswertung angewendet werden. Dieses Konzept sieht vor, dass jeweils zwei oder mehr aufeinanderfolgende Abtastzyklen betrachtet werden, wobei ein Objekt in jedem dieser Abtastzyklen an derselben Stelle oder innerhalb einer definierten Umgebung detektiert werden muss, um ein Objekterfassungssignal auszulösen. Dabei wird angenommen, dass solche Objekte, die ein falschpositives Objekterfassungssignal auslösen könnten, sich relativ rasch bewegen und daher nur in einem Teil der betrachteten Abtastzyklen und/oder in allen Abtastzyklen an jedoch sehr weit voneinander entfernten Positionen erfasst werden.

Durch eine derartige Mehrfachauswertung wird zwar die Robustheit des Sensors gegenüber Störungen erhöht, die auf kleinen okkludierenden Objekten oder Partikeln wie Insekten, Regentropfen, Materialspänen oder Schneeflocken beruhen, so dass sich die Verfügbarkeit einer durch den Sensor überwachten Maschine erhöht. Allerdings erhöht sich mit der Anzahl der auszuwertenden Abtastzyklen auch die Ansprechzeit des Sensors, da ein mehrfaches Abtasten entsprechend mehr Zeit benötigt. Eine erhöhte Ansprechzeit kann es aber beispielsweise erforderlich machen, die Arbeitsgeschwindigkeit der überwachten Maschine zu reduzieren, da zum Beispiel gewährleistet sein muss, dass ein sicheres Anhalten stattgefunden hat, bevor sich das Objekt (also zum Beispiel eine gefährdete Person) der Maschine genähert hat oder sich die Maschine (zum Beispiel ein fahrerloses Transportsystem) einer gefährdeten Person genähert hat. Eine weitere Möglichkeit, dem zu begegnen ist es, das überwachte Schutzfeld zu vergrößern. Damit würde das Objekt (zum Beispiel eine gefährdete Person) zwar früher detektiert, aber die Wahrscheinlichkeit einer falschen Abschaltung steigt, da mehr Fläche überwacht wird.

In DE 10 2009 055 990 B4 wird vorgeschlagen, dass nur solche Objekte ein Objekterfassungssignal auslösen können, die sich länger als eine vorgebbare Verweildauer innerhalb des Schutzfeldes befinden, wobei für unterschiedliche Überwachungsfelder unterschiedliche Verweildauern vorgegeben werden können.

In EP 2 703 837 B1 wird ein Sicherheits-Laserscanner beschrieben, bei dem zur Kompensation von Sichttrübungen, die durch Nebel, Regen, Schnee oder Staub verursacht werden können, Lichtpulse zweier unterschiedlicher Wellenlängen zeitlich versetzt ausgesendet und entsprechend ausgewertet werden.

DE 101 49 768 A1 schlägt einen Laserscanner vor, bei dem eine die Sichtweite beeinträchtigende Störung anhand von charakteristischen Störungseigenschaften erkannt wird, die mittels eines Sensors durch Auswerten der reflektierten Strahlung identifizierbar sind.

EP 1 391 752 A2 beschreibt ein Lichtgitter mit mehreren Paaren von Sendern und Empfängern, wobei die Sender zeitlich nacheinander Sendern aktiviert werden und eine Mehrfachabtastung durchgeführt, Die Anzahl der aufeinanderfolgenden Abtastzyklen, innerhalb derer für eine jeweilige Strahlachse eine Unterbrechung vorliegen muss, um ein Objektfeststellungssignal zu generieren, wird manuell eingegeben oder vor Inbetriebnahme des Lichtgitters mit Hilfe einer Kennlinie ausgewählt.

Schließlich befasst sich DE 10 2012 112 987 B3 mit einem optoelektronischen Sensor, bei dem ein Sichttrübungsmaß winkelabhängig für eine Sichttrübung in Richtung des Sendelichtstrahls bestimmt wird und das Ausmaß der Sichttrübung winkelabhängig bewertet wird.

Es ist die Aufgabe der Erfindung, ein Verfahren zum Betreiben eines Scanners anzugeben, welches eine zuverlässige Erkennung von unzulässigen Objekten im Schutzfeld gewährleistet und gleichzeitig eine Beeinträchtigung des Scannerbetriebs durch falsch-positive Objekterfassungssignale, die von Objekten stammen, die aufgrund ihrer Größe die Sicherheit nicht beinträchtigen können, zu minimieren, so dass der Scanner bzw. eine durch den Scanner überwachte Maschine mit hoher Verfügbarkeit betrieben werden kann.

Die Lösung der Aufgabe erfolgt durch ein Verfahren mit den Merkmalen des Anspruchs 1.

Unter einem Überwachungsfeld wird insbesondere ein Raumbereich verstanden, in den jeweils ein Sendelichtstrahl ausgesendet wird, wobei die Sendelichtstrahlen insbesondere gepulst ausgesendet werden können. Insbesondere bei einer kontinuierlichen Ausendung der Sendelichtstrahlen kann aber ein Überwachungsfeld auch als ein Raumbereich betrachtet werden, in welchen der Lichtempfänger zu einem jeweiligen Abtastzeitpunkt bzw. bei einer jeweiligen Abtastposition, insbesondere Abtastwinkelposition, sowie ggf. für eine zugehörige Abtastzeitdauer "blickt", d.h, der Lichtempfänger aktiviert und/oder ausgewertet wird. Die Häufigkeit entspricht dabei zum Beispiel einer bezüglich des abgetasteten Bereiches normierten Anzahl von erzeugten Empfangssignalen. Im Regelfall ist diese Anzahl direkt mit der Anzahl von Empfangssignalen pro Zeiteinheit korreliert. Eine einfache Möglichkeit sieht vor, dass die Häufigkeit an Hand der Anzahl von erzeugten Empfangssignalen pro Zeiteinheit bestimmt ist. Die Häufigkeit kann in der Regel global für alle Überwachungsfelder des Schutzfeldes ermittelt werden. Es ist jedoch auch nicht ausgeschlossen, eine spezifische Häufigkeit individuell für jedes Überwachungsfeld oder für Gruppen mit jeweils mehreren Überwachungsfeldern zu ermitteln.

Das genannte Detektionssicherheitsmaß stellt somit ein quantifizierendes Maß für die Umgebungsbedingungen dar, unter denen der Scanner betrieben wird. Wenn störende Objekte, die zur Auslösung von falsch-positiven Objekterfassungssignalen beitragen können, gar nicht oder nur in sehr geringer Anzahl vorhanden sind, werden in der Regel nur sehr wenige Empfangssignale pro Zeiteinheit erzeugt. Dies signalisiert dem Scanner, dass die Umgebungsbedingungen, unter denen der Scanner betrieben wird, unkritisch sind und beispielsweise Regeln, nach denen der Scanner Ausgangssignale an einem Signalausgang des Scanners ausgibt, anders gewählt oder vorgegeben werden können als beim Vorliegen von kritischen Umgebungsbedingungen, bei denen relativ häufig störende Partikel wie zum Beispiel Insekten, Regentropfen, Materialspäne oder Schneeflocken in das Schutzfeld eindringen und zu einer erhöhten Häufigkeit von Empfangssignalen führen. Wenn unter widrigen Umgebungsbedingungen die Robustheit des Scanners gegenüber Störungen im Vergleich mit optimalen Umgebungsbedingungen auf einem gleichbleibenden Niveau gehalten werden soll, müssen Regeln oder Bedingungen, die den internen Betrieb des Scanners beeinflussen, bzw. Regeln oder Bedingungen, die einer Ausgabe von Ausgangssignalen zugrunde liegen, geändert werden. Diese Regeln oder Bedingungen können auf der Grundlage des Detektionssicherheitsmaßes festgelegt werden, was nachfolgend noch näher erläutert wird. Der Scanner wird demnach auf der Grundlage des Detektionssicherheitsmaßes betrieben.

Das Detektionssicherheitsmaß kann sowohl diskrete Werte, die beispielsweise auf der Grundlage von einem oder mehreren Schwellenwerten für die ermittelte Häufigkeit festgelegt werden können, oder auch kontinuierliche bzw. quasikontinuierliche, z.B. durch eine Digitalisierung bedingte Werte annehmen.

Gemäß einer vorteilhaften Ausgestaltung des erfindungsgemäßen Verfahrens kann auf der Grundlage des Detektionssicherheitsmaßes ein erstes Signal an einem Signalausgang des Scanners ausgegeben werden. Dieser Signalausgang kann beispielsweise mit einer durch den Scanner zu überwachenden Maschine oder einem Fahrzeug verbunden sein und in dieser Maschine oder diesem Fahrzeug bestimmte Maßnahmen auslösen. So kann beispielsweise der Maschine oder dem Fahrzeug beim Vorliegen von widrigen Umgebungsbedingungen, die zu einem verringerten Detektionssicherheitsmaß führen, signalisiert werden, dass die Arbeitsgeschwindigkeit der Maschine bzw. eine Fahrgeschwindigkeit des Fahrzeugs reduziert werden muss, oder dass allgemein der Betrieb in einem sichereren Modus erfolgen muss. Diese Signalisierung kann insbesondere umfassen, dass der Maschine bzw. dem Fahrzeug mitgeteilt wird, dass sich die Ansprechzeit des Scanners aufgrund von Änderungen der Betriebsbedingungen des Scanners erhöht hat, was nachfolgend noch näher erläutert wird. Das genannte erste Signal kann einen kontinuierlichen oder quasi kontinuierlichen Wert annehmen oder als diskretes einstufiges oder mehrstufiges Schaltsignal ausgestaltet sein, wenn das Detektionssicherheitsmaß einen oder mehrere vorgegebene Schwellenwerte unter- oder überschritten hat.

Dabei kann zum Beispiel das Detektionssicherheitsmaß zur weiteren Verarbeitung an den Signalausgang weitergegeben werden. Alternativ kann auch die resultierende Ansprechzeit aus dem Detektionssicherheitsmaß ermittelt und ausgegeben werden um die maximale Arbeitsgeschwindigkeit oder Fahrgeschwindigkeit festzulegen.

Beispielsweise kann das an dem Signalausgang ausgegebene Signal bewirken, dass ein autonom fahrendes Flurförderfahrzeug mit verringerter Fahrgeschwindigkeit betrieben wird, wenn zum Beispiel Schneefall in der Betriebsumgebung des Scanners zu einer Erhöhung der Häufigkeit, mit der Empfangssignale erzeugt werden, führt und dadurch das Detektionssicherheitsmaß abgesenkt wird. Umgekehrt kann die Fahrgeschwindigkeit wieder erhöht werden, wenn der Schneefall nachlässt oder aufhört und damit die Häufigkeit der Empfangssignale sinkt und das Detektionssicherheitsmaß wieder ansteigt.

Schließlich ist es auch möglich, bei einer Veränderung des Detektionssicherheitsmaßes Maßnahmen auszulösen, die die Ansprechzeit entsprechend beeinflussen und diese Veränderung der Ansprechzeit frühzeitig an den Signalausgang mitzuteilen oder zum Beispiel mit einer Anzeige anzugeben, so dass diese Veränderung der Ansprechzeit zum Beispiel von einem Benutzer oder einer nachgelagerten Steuerung berücksichtigt werden kann. Derartige Maßnahmen können zum Beispiel eine Änderung des Grades der Mehrfachauswertung oder die Änderung der Winkelauflösung sein.

Gemäß einer weiteren vorteilhaften Ausführungsform der Erfindung kann auf der Grundlage der über eine vorgegebene Anzahl von aufeinanderfolgenden Abtastzyklen (im Folgenden auch "Mehrfachauswertungsanzahl") erzeugten Empfangssignale ermittelt werden, ob ein erfasstes Objekt zumindest ein vorgegebenes Objekterfassungskriterium für ein unzulässiges Objekt erfüllt, und ein Objekterfassungssignal erzeugt werden, wenn das Objekterfassungskriterium erfüllt ist, wobei die vorgegebene Mehrfachauswertungsanzahl zumindest auf der Grundlage des Detektionssicherheitsmaßes bestimmt wird. Im Unterschied zu herkömmlichen Verfahren, bei denen die Mehrfachauswertungsanzahl fest vorgegeben ist, erfolgt gemäß dieser Ausgestaltung eine dynamische Anpassung der Mehrfachauswertungsanzahl in Abhängigkeit von dem Detektionssicherheitsmaß und damit insbesondere in Abhängigkeit von den herrschenden Umgebungsbedingungen. Das genannte Objekterfassungssignal kann beispielsweise alternativ oder zusätzlich zu dem genannten ersten Signal als zweites Signal an einem (weiteren) Signalausgang des Scanners ausgegeben werden und kann an einer mit dem Scanner verbundenen Maschine oder einem Fahrzeug bestimmte Maßnahmen auslösen, die insbesondere im Vergleich mit den durch das genannte erste Signal ausgelösten Maßnahmen weitergehend sein können und zum Beispiel darin bestehen können, dass die Maschine abgeschaltet wird oder das Fahrzeug bis zum Stillstand abgebremst wird.

Der Wert des Detektionssicherheitsmaßes kann beispielsweise unmittelbar die vorgegebene Mehrfachauswertungsanzahl repräsentieren. Die während eines jeweiligen Zyklus erzeugten Empfangssignale können beispielsweise für die vorgegebene Mehrfachauswertungsanzahl gespeichert werden, und das Objekterfassungssignal kann auf der Grundlage der gespeicherten Empfangssignale erzeugt werden.

Das vorstehend genannte vorgegebene Objekterfassungskriterium kann beispielsweise darin bestehen, dass ein Empfangssignal, das in einem oder in mehreren zueinander benachbarten Überwachungsfeldern das Vorhandensein eines Objekts signalisiert, in mehreren, nämlich der vorgegebenen Anzahl von aufeinanderfolgenden Abtastzyklen (Mehrfachauswertungsanzahl) in demselben oder denselben Überwachungsfeldern bzw. in einer definierten Umgebung dieses oder dieser Überwachungsfelder auftreten muss, damit ein Objekterfassungssignal erzeugt wird. Beispielsweise kann bei einem Flurförderfahrzeug der Scanner mit einer minimalen Anzahl, beispielsweise 1, von aufeinanderfolgenden Abtastzyklen betrieben werden, wenn ein hohes Detektionssicherheitsmaß das Vorliegen von günstigen Umgebungsbedingungen, d.h. ohne störende Partikel, signalisiert. Da sicherheitskritische Objekte innerhalb eines Abtastzyklus erkannt werden können, ist die Ansprechzeit des Scanners in diesem Modus sehr kurz. Verschlechtern sich die Umgebungsbedingungen, beispielsweise durch Regen, Schneefall, Staubanfall oder dergleichen, verringert sich das Detektionssicherheitsmaß und führt dazu, dass die vorgegebene Mehrfachauswertungsanzahl heraufgesetzt wird, zum Beispiel auf 2, 3 oder mehr. Dadurch kann die Robustheit des Scanners bzw. die Verfügbarkeit einer angeschlossenen Maschine bzw. eines angeschlossenen Fahrzeugs im Wesentlichen aufrecht erhalten werden, da die erhöhte Anzahl von Abtastzyklen, die ausgewertet werden, es ermöglicht, die störenden Partikel von tatsächlich sicherheitskritischen Objekten zu diskriminieren.

Es hat sich als vorteilhaft erwiesen, wenn das Objekterfassungskriterium umfasst, dass für die vorgegebene Mehrfachauswertungsanzahl festgestellt wird, dass zumindest ein erfasstes Objekt eine vorgegebene Mindestgröße aufweist und/oder sich insbesondere stationär in zumindest einem der Überwachungsfelder befindet. Hierbei können stationäre oder auch sich innerhalb eines vorgegebenen Geschwindigkeitsbereichs bzw. Winkelgeschwindigkeitsbereichs bewegende Objekte das Objekterfassungskriterium erfüllen. Unter einem stationären Objekt wird in diesem Zusammenhang auch ein winkelstationäres Objekt verstanden, welches zwar in derselben Winkelposition verharrt, jedoch seinen Abstand zum Scanner ändert, was beispielsweise aufgrund einer fehlenden Abstandsmessung nicht detektiert werden kann.

Vorteilhafterweise wird die vorgegebene Mehrfachauswertungsanzahl erhöht, wenn sich das Detektionssicherheitsmaß verringert, und/oder die vorgegebene Mehrfachauswertungsanzahl verringert, wenn sich das Detektionssicherheitsmaß erhöht.

Eine erhöhte Ansprechzeit, welche auf eine erhöhte vorgegebene Mehrfachauswertungsanzahl zurückzuführen ist, und die damit verbundenen Sicherheitsrisiken können vorteilhafterweise dadurch kompensiert werden, dass - wie vorstehend bereits erwähnt - ein entsprechendes erstes Signal an einen Signalausgang des Scanners ausgegeben wird, welches beispielsweise dazu führt, dass die Maschine bzw. das Fahrzeug mit verringerter Arbeitsgeschwindigkeit betrieben werden, so dass die erhöhte Ansprechzeit durch eine verringerte Nachlaufzeit der Maschine bis zum Stillstand bzw. einen verringerten Bremsweg des Fahrzeugs kompensiert werden kann. Wenn sich die Umgebungsbedingungen wieder verbessern, kann die vorgegebene Mehrfachauswertungsanzahl herabgesetzt werden, so dass sich die Ansprechzeit wieder verkürzt und die Maschine bzw. das Fahrzeug mit einer höheren bzw. der ursprünglichen Geschwindigkeit betrieben werden können. Wie beschrieben kann diese Ansprechzeit an einem Signalausgang mitgeteilt werden, so dass sie von einer nachgeschalteten Steuerung berücksichtigt werden kann. Außerdem kann sie zum Beispiel auf einer Anzeigeeinheit angezeigt werden um einen Benutzer über die veränderte Ansprechzeit zu informieren.

Das Ermitteln der Häufigkeit, mit welcher Empfangssignale erzeugt werden, und das Ermitteln des Detektionssicherheitsmaßes auf der Grundlage dieser Häufigkeit können umfassen, dass für einen vorgegebenen Zeitraum die Anzahl von registrierten Empfangssignalen ermittelt wird, und dass das Detektionssicherheitsmaß auf der Grundlage der ermittelten Anzahl von registrierten Empfangssignalen auf einen vorgegebenen Wert gesetzt wird. Beispielsweise kann das Detektionssicherheitsmaß auf einen Höchstwert gesetzt werden, wenn in dem vorgegebenen Zeitraum kein Empfangssignal registriert wurde. Je nach Anzahl der registrierten Empfangssignale kann das Detektionssicherheitsmaß auf niedrigere Werte gesetzt werden, wobei die Zuordnung der Werte beispielsweise auf der Grundlage einer Lookup-Tabelle oder mittels einer entsprechenden Funktion erfolgen kann. Der genannte vorgegebene Zeitraum muss nicht zwingend fest vorgegeben sein, sondern kann auch dynamisch, insbesondere in iterativer Weise, an die jeweilige Anzahl der registrierten Empfangssignale angepasst werden.

Ebenso kann die Häufigkeit auf einen vorgegebenen Raumbereich (also zum Beispiel einen vom Laserstrahl überstrichenen Winkelbereich) normiert werden, über den die Anzahl von registrierten Empfangssignalen ermittelt wird.

Gemäß einer weiteren vorteilhaften Ausgestaltung des Verfahrens kann ein jeweiliges Empfangssignal zusätzlich zu den Informationen über die Winkelposition des Überwachungsfeldes auch Informationen über den Abstand eines darin befindlichen Objekts von dem Scanner umfassen. Bei dem Scanner kann es sich somit um einen reinen Winkelscanner oder einen abstandsmessenden Scanner handeln.

Vorteilhafterweise wird die Größe eines erfassten Objekts dadurch ermittelt, dass die Größe eines Winkelbereichs, über den sich das jeweilige Objekt erstreckt, auf der Grundlage der Anzahl benachbarter Überwachungsfelder, bei denen die Anwesenheit eines Objekts bei im Wesentlichen dem gleichen Abstand von dem Scanner festgestellt wurde, und deren Winkelabstände sowie dem ermittelten Abstand des Objekts von dem Scanner ermittelt wird. Bei dem ermittelten Abstand kann es sich insbesondere um einen mittleren Abstand, der aus den Abständen der betreffenden Überwachungsfelder bestimmt wurde, handeln.

Das erfindungsgemäße Verfahren dient dem Betreiben eines Scanners, insbesondere Laserscanners, vorzugsweise ausgestaltet mit einer drehbaren Lichtablenkeinheit zur Ablenkung des Lichtes der Lichtquelle in das Schutzfeld. Der Scanner ist dann zur Überwachung von einer oder mehreren Abtastflächen ausgelegt, wobei die Überwachungsfelder insbesondere sektorförmig sind. Die Überwachungsfelder können hierbei sowohl in zwei als auch in drei Dimensionen sektorförmig sein.

Es ist vorteilhaft, wenn die Größe der Winkelauflösung, mit welcher das Schutzfeld abgetastet wird, in Abhängigkeit von dem Detektionssicherheitsmaß einstellbar ist, wobei die Winkelauflösung verringert wird, wenn sich das Detektionssicherheitsmaß erhöht, und/oder die Winkelauflösung erhöht wird, wenn sich das Detektionssicherheitsmaß verringert. Die genannte Winkelauflösung verhält sich reziprok zu dem Winkelabstand zweier benachbarter Überwachungsfelder, so dass eine kleine Winkelauflösung einem großen Winkelabstand entspricht und umgekehrt. Durch ein Verändern der Winkelauflösung wird in der Regel lediglich die Größe der Überwachungsfelder sowie die Anzahl der Überwachungsfelder geändert, da zumeist die Größe des Winkelbereichs, über den sich das Schutzfeld erstreckt, nicht geändert werden soll. Durch ein Verringern der Winkelauflösung reduziert sich die Anzahl von Abtastungen je Abtastzyklus und damit die Zeitdauer eines Abtastzyklus. Dadurch wird die Ansprechzeit des Scanners verringert, so dass gegebenenfalls eine an den Scanner angeschlossene Maschine bzw. ein Fahrzeug mit höherer Geschwindigkeit betrieben werden kann. Allerdings kann sich gegebenenfalls die Reichweite des Scanners verringern, wenn eine vorgegebene Mindestgröße zu detektierender Objekte nicht unterschritten werden soll.

Wie beschrieben kann die geänderte Ansprechzeit an einem Signalausgang mitgeteilt werden, so dass sie von einer nachgeschalteten Steuerung berücksichtigt werden kann. Außerdem kann sie zum Beispiel auf einer Anzeigeeinheit angezeigt werden um einen Benutzer über die veränderte Ansprechzeit zu informieren.

Gemäß einer weiteren vorteilhaften Ausgestaltung des Verfahrens erfolgt das Erhöhen und/oder das Vermindern des Wertes des Detektionssicherheitsmaßes bei einer Änderung der Häufigkeit (mit welcher Empfangssignale ermittelt werden) mit zeitlicher Verzögerung. Hierdurch werden rasch aufeinanderfolgende Anpassungen des Detektionssicherheitsmaßes verhindert. Die zeitliche Verzögerung kann für das Erhöhen und das Vermindern jeweils unterschiedlich hoch sein. So kann zum Beispiel ein langsames Ansprechen auf eine verminderte Häufigkeit und ein schnelles Ansprechen auf eine erhöhte Häufigkeit erfolgen. Alternativ oder zusätzlich kann das Erhöhen und/oder das Vermindern der vorgegebenen Anzahl von aufeinanderfolgenden Abtastzyklen ebenfalls mit zeitlicher Verzögerung erfolgen.

Vorteilhafterweise können für das Ermitteln des Detektionssicherheitsmaßes auch solche Empfangssignale berücksichtigt werden, die nicht auf ein in dem Schutzfeld vorhandenes Objekt zurückzuführen sind. Derartige Empfangssignale können beispielsweise auf ein Erfassen von Fremdlicht durch den Lichtempfänger zurückgehen, beispielsweise bei einer "Blendung" des Scanners.

Die vorliegende Erfindung betrifft ferner einen, insbesondere abstandsmessenden, Scanner zur Überwachung eines zumindest zweidimensionalen Schutzfeldes, welches in mehrere zyklisch abtastbare Überwachungsfelder unterteilt ist, wobei der Scanner zumindest einen Lichtsender, zumindest einen Lichtempfänger und eine Steuereinheit umfasst, und wobei die Steuereinheit zum Durchführen des Verfahrens gemäß einer der vorstehend beschriebenen Ausgestaltungen ausgelegt ist.

Weitere vorteilhafte Ausführungsformen der Erfindung ergeben sich aus den Unteransprüchen, der Beschreibung und den Zeichnungen. Vorteilhafte Ausführungsformen des Scanners ergeben sich insbesondere auch im Zusammenhang mit vorteilhaften Ausgestaltungen des Verfahrens.

Die Erfindung wird nachfolgend anhand eines Ausführungsbeispiels mit Bezug auf die Zeichnungen beschrieben. Es zeigen:
- Fig. 1: eine schematische Darstellung eines Scanners zur Durchführung des erfindungsgemäßen Verfahrens, in dessen Schutzfeld ein Objekt anwesend ist; und
- Fig. 2: eine schematische vergleichende Darstellung von Werten für verschiedene Größen, welche für das Verfahren von Bedeutung sind.

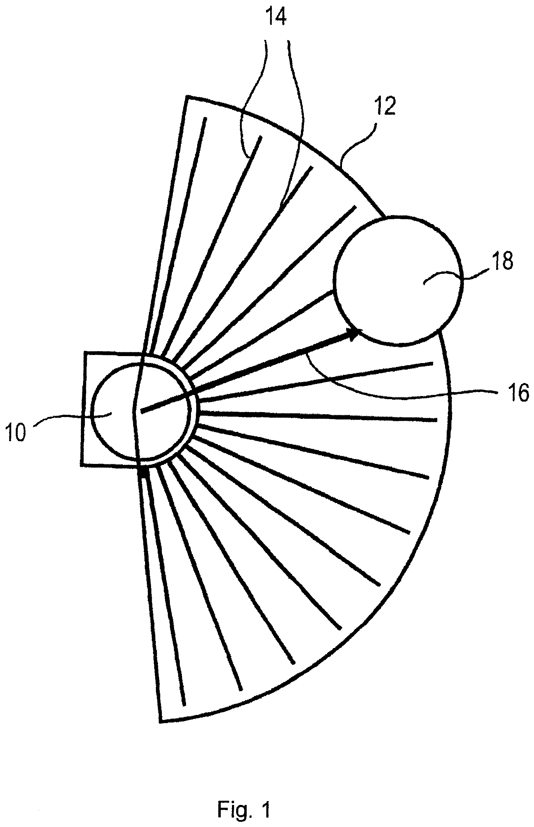

Fig. 1 zeigt einen Scanner 10, beispielsweise einen abstandsmessenden Laserscanner, welcher im vorliegenden Beispiel ein Schutzfeld 12 überwacht, welches sich ungefähr über einen Winkelbereich von 165° erstreckt.

Der Scanner 10 weist einen Lichtsender zum Aussenden eines Sendelichtstrahls 16 in das Schutzfeld 12, einen Lichtempfänger zum Empfangen von Licht, welches von einem gegebenenfalls in dem Schutzfeld vorhandenen Objekt 18 reflektiert oder remittiert wird, sowie einer Ablenkeinheit, welche dazu ausgelegt ist, den Sendewinkel, d.h. den Winkel in dem der Sendelichtstrahl 16 bezogen auf das Schutzfeld 12 ausgesendet wird, und gegebenenfalls auch den Empfangswinkel, d.h. die Winkelrichtung, aus welcher bezogen auf das Schutzfeld 12 von einem Objekt reflektiertes oder remittiertes Licht empfangen wird, synchron zum Sendewinkel zu verändern. Nach einer bestimmten Winkeländerung kann jeweils ein Lichtpuls ausgesendet und gegebenenfalls zurückgestreutes Empfangslicht erfasst werden.

Auf diese Weise ergibt sich eine Anzahl von Lichtpfaden 14, welche nacheinander durch den Scanner 10 abgetastet werden. Jedem Lichtpfad 14 ist hierbei ein sektorförmiges Überwachungsfeld zugeordnet, welche sich zu beiden Seiten des jeweiligen Lichtpfades 14 erstreckt, da sich der Sendelichtstrahl 16 nicht wie im vorliegenden schematischen Ausführungsbeispiel gezeigt, exakt entlang einer Linie ausbreitet, sondern eine gewisse Divergenz aufweist. Im Idealfall erfolgt die Auslegung des Scanners 10 derart, dass die den Lichtpfaden 14 zugeordneten Überwachungsfelder aneinander angrenzen. Benachbarte Überwachungsfelder können sich jedoch auch überlappen oder um ein gewisses Maß voneinander beabstandet sein. Im vorliegenden Beispiel sind 15 Lichtpfade 14 bzw. Überwachungsfelder vorgesehen.

Prinzipiell ist die vorliegende Erfindung nicht auf einen solchen Scanner beschränkt, bei dem die einzelnen Lichtpfade 14 zeitlich nacheinander abgetastet werden. Es können auch alle Lichtpfade 14 oder Gruppen von Lichtpfaden 14 synchron abgetastet werden, was eine entsprechende Anzahl von Lichtsender/- empfängerpaaren voraussetzt. Der Scanner 10 muss ferner nicht notwendigerweise nur eine einzige Abtastfläche aufweisen, die im vorliegenden Beispiel durch die Zeichnungsebene definiert ist, sondern kann auch mehrere Abtastflächen aufweisen, z.B. mehrere parallel voneinander beabstandete Abtastebenen bzw. Abtastflächen oder mehrere konische Abtastflächen mit unterschiedlichen Azimutwinkeln. Sofern der Scanner 10 als abstandsmessender Scanner ausgelegt ist, kann die Bestimmung des Abstandes zu einem erfassten Objekt in an sich bekannter Weise aufgrund der Laufzeit des Sendelichtstrahls 14 oder der Phasenverschiebung zwischen moduliertem Sendelicht und dem Empfangslicht erfolgen. Der Scanner 10 kann eine integrierte Steuereinheit aufweisen, welche zum Erzeugen von Empfangssignalen auf der Grundlage des von dem Lichtempfänger empfangenen Lichts ausgelegt ist. Die Empfangssignale können spezifisch für ein Überwachungsfeld, in dem Licht von einem Objekt zurückgestreut wurde, Informationen über die Winkelposition dieses Überwachungsfeldes und über den Abstand des Objekts von dem Scanner 10 umfassen.

Das Schutzfeld wird zyklisch abgetastet, so dass für jeden Lichtpfad 14 bzw. jedes Überwachungsfeld eine zeitliche Abfolge von Empfangssignalen vorliegt.

Der Scanner 10 kann eine Speichereinrichtung umfassen, welche die Empfangssignale über ein oder mehrere Abtastzyklen speichert.

Die Größe eines erfassten Objekts 18 kann auf der Grundlage des ermittelten Abstandes des Objekts 18 von dem Scanner 10 und aufgrund der ermittelten Größe des Winkelbereichs, über den sich das erfasste Objekt erstreckt, ermittelt werden. Das Ermitteln der Größe des Winkelbereichs, über den sich das Objekt erstreckt, kann insbesondere auf der Grundlage der Anzahl benachbarter Überwachungsfelder, die durch die Anwesenheit des Objekts verletzt werden, und deren Winkelabstände ermittelt werden.

Gemäß einer Abwandlung kann die Winkelauflösung des Scanners 10 verändert werden. Eine Erhöhung der Winkelauflösung entspricht einer Verringerung des Winkelabstands zwischen zwei benachbarten Lichtpfaden 14 bzw. Überwachungsfeldern und umgekehrt. Wenn die Größe des Schutzfeldes 12 hierbei unverändert bleiben soll, muss die Anzahl der Lichtpfade 14 bzw. der Überwachungsfelder entsprechend angepasst werden.

Wenn die Winkelauflösung verringert wird, vergrößert sich der Abstand benachbarter Lichtpfade 14 bzw. Überwachungsfelder für einen vorgegebenen radialen Abstand von dem Scanner 10. Aufgrund dessen ist die Reichweite des Scanners 10 in Abhängigkeit von einer Mindestgröße für gerade noch zu detektierende Objekte begrenzt. Der Abstand zwischen zwei benachbarten Sendelichtstrahlen 14 muss für die zuverlässige Detektion eines Objekts 18, welches sich in einer der Reichweite entsprechenden Entfernung zu dem Scanner 10 befindet, kleiner sein als die Größe des Objekts 18. Es versteht sich, dass sich bei einer Verringerung der Winkelauflösung dieser Abstand zwischen benachbarten Sendelichtstrahlen 14 vergrößert und somit unter der Annahme einer gleichbleibenden Mindestgröße für ein zu detektierendes Objekt 18 die Reichweite des Scanners entsprechend verringert.

Die Steuereinheit des Scanners 10 ist dazu ausgelegt, eine Häufigkeit, mit welcher Empfangssignale erzeugt werden, zu ermitteln und auf der Grundlage dieser Häufigkeit ein Detektionssicherheitsmaß zu ermitteln, wobei der Wert des Detektionssicherheitsmaßes mit sinkender Häufigkeit erhöht wird und mit steigender Häufigkeit verringert wird. Die Häufigkeit entspricht dabei zum Beispiel einer bezüglich des abgetasteten Bereiches normierten Anzahl von erzeugten Empfangssignalen. Im Regelfall ist diese Anzahl direkt mit der Anzahl von Empfangssignalen pro Zeiteinheit korreliert. Die Häufigkeit kann zum Beispiel als Anzahl der Empfangssignale pro Winkeleinheit (des vom Laserstrahl überstrichenen Bereiches) definiert sein. Bei einem kontinuierlich mit gleicher Geschwindigkeit betriebenen Scanner ergibt sich damit die Häufigkeit als die Anzahl der Empfangssignale pro Zeiteinheit.

Die Häufigkeit kann global für alle Überwachungsfelder (also aus der Summe über alle Überwachungsfelder) ermittelt werden, aber auch spezifisch für jedes einzelne Überwachungsfeld oder für eine Gruppe von Überwachungsfeldern. Ferner ist es möglich, bestimmte Empfangssignale von der Ermittlung der Häufigkeit auszuschließen, beispielsweise wenn festgestellt wird, dass die Empfangssignale auf ein Objekt zurückgehen, das beispielsweise aufgrund seiner Dimensionen als sicherheitskritisch eingestuft wird.

Beispielsweise führen Empfangssignale, die nicht auf sicherheitskritische Objekte zurückzuführen sind, sondern die auf Störungen durch kleine Partikel, beispielsweise Regentropfen, Schneeflocken, Materialspäne oder dergleichen (also auf widrige Umgebungsbedingungen) zurückgehen, zu einer erhöhten Häufigkeit von Empfangssignalen führen. Unter derartigen Umgebungsbedingungen wird das Detektionssicherheitsmaß verringert. Wenn sich im Gegenzug die Häufigkeit aufgrund von sich bessernden Umgebungsbedingungen wieder vermindert, wird das Detektionssicherheitsmaß wieder erhöht.

Die Steuereinheit kann dazu ausgelegt sein, auf der Grundlage des Detektionssicherheitsmaßes verschiedene Maßnahmen durchzuführen.

So kann zum einen auf der Grundlage des Detektionssicherheitsmaßes ein erstes Signal an einem Signalausgang des Scanners 10 ausgegeben werden. Dieses Signal kann beispielsweise dann ausgegeben werden, wenn das Detektionssicherheitsmaß einen vorgegebenen Schwellenwert unterschreitet. Dieses erste Signal kann beispielsweise dazu verwendet werden, bei einer durch den Scanner 10 überwachten Maschine oder einem Fahrzeug ein Anhalten der Maschine oder des Fahrzeugs oder zumindest ein Verringern der Bewegungsgeschwindigkeit der Maschine bzw. des Fahrzeugs zu initiieren.

Weiterhin kann das Detektionssicherheitsmaß herangezogen werden, um eine vorgegebene Anzahl von aufeinanderfolgenden Abtastzyklen (Mehrfachauswertungsanzahl) festzulegen, über die ermittelt wird, ob ein erfasstes Objekt zumindest ein vorgegebenes Objekterfassungskriterium für ein unzulässiges Objekt erfüllt, wobei die Steuereinheit ein Objekterfassungssignal erzeugt, wenn das Objekterfassungskriterium erfüllt ist. Das Objekterfassungssignal kann alternativ oder zusätzlich zu dem ersten Signal als ein zweites Signal an einem gegebenenfalls weiteren Signalausgang des Scanners 10 ausgegeben werden und kann an einer mit dem Scanner 10 verbundenen Maschine bestimmte, insbesondere weitergehende Maßnahmen auslösen, beispielsweise eine Schnellabschaltung.

Wie bereits vorstehend erläutert wurde, kann das Objekterfassungskriterium umfassen, dass für die vorgegebene Anzahl von aufeinanderfolgenden Abtastzyklen festgestellt wird, dass zumindest ein erfasstes Objekt eine vorgegebene Mindestgröße aufweist und/oder sich insbesondere stationär oder sich innerhalb eines vorgegebenen Geschwindigkeitsbereichs bewegend in zumindest einem der Überwachungsfelder befindet. Durch ein Erhöhen dieser Anzahl von aufeinanderfolgenden Abtastzyklen (Mehrfachauswertungsanzahl) ist es möglich, bei widrigen Umgebungsbedingungen mit relativ häufig auftretenden störenden Partikeln, die an sich nicht sicherheitskritisch sind, die Robustheit des Scanners 10 gegenüber solchen Störungen zu verbessern. Da ein tatsächlich sicherheitskritisches Objekt somit über mehrere Abtastzyklen "beobachtet"' werden muss, um es zuverlässig von einem nicht sicherheitskritischen Partikel oder Kleinobjekt unterscheiden zu können, erhöht sich die Ansprechzeit des Scanners, d.h. die Zeit zwischen dem Eintritt eines sicherheitskritischen Objekts in das Schutzfeld und der Ausgabe eines Objekterfassungssignals, welches entsprechende Sicherheitsmaßnahmen bei einer an den Scanner 10 angeschlossenen Maschine auslöst.

Diese erhöhte Ansprechzeit kann beispielsweise dadurch kompensiert werden, dass die Maschine mit erhöhten Sicherheitsmaßnahmen, beispielsweise einer verringerten Arbeits- oder Bewegungsgeschwindigkeit, betrieben wird. Dazu kann die veränderte Ansprechzeit zum Beispiel an eine nachgelagerte Steuerung gemeldet oder einem Benutzer angezeigt werden.

Die vorliegende Erfindung ermöglicht es, diese erhöhten Sicherheitsmaßnahmen dynamisch anzupassen, d.h. in Abhängigkeit von den Umgebungsbedingungen. Wenn die Häufigkeit von Störungen durch Kleinpartikel wieder zurückgeht und sich somit die Umgebungsbedingungen verbessern, kann die vorangegangene Erhöhung der vorgegebenen Mehrfachauswertungsanzahl zurückgenommen werden, so dass sich auch die Ansprechzeit des Scanners wieder vermindert. Entsprechend kann das Signal, welches die entsprechenden Sicherheitsvorkehrungen bei der überwachten Maschine auslöst, wieder zurückgenommen oder zumindest reduziert werden, so dass die Maschine wieder mit erhöhter oder maximaler Betriebsgeschwindigkeit betrieben werden kann.

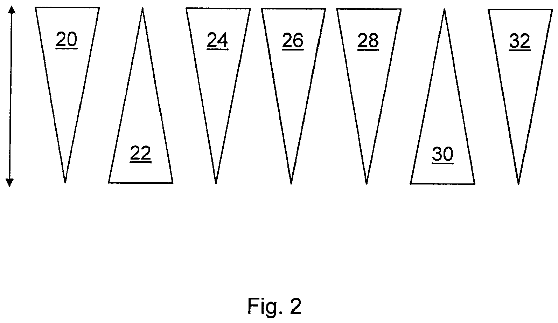

Das Verhältnis bzw. die gegenseitige Abhängigkeit verschiedener Größen, die für das erfindungsgemäße Verfahren relevant sind, werden in Fig. 2 durch jeweilige Dreiecke repräsentiert, wobei eine geringe Breite des Dreiecks einen niedrigen Wert und eine große Breite einen hohen Wert der jeweiligen Größe darstellt.

Das erste Dreieck repräsentiert die Häufigkeit 20 von Empfangssignalen. Mit zunehmender Häufigkeit 20 der Detektion von Empfangssignalen wird entsprechend das Detektionssicherheitsmaß 22 verringert und umgekehrt.

Bei Vorliegen eines hohen Detektionssicherheitsmaßes 22 wird die vorgegebene Anzahl 24 von aufeinanderfolgenden Abtastzyklen, über die ermittelt wird, ob ein erfasstes Objekt ein Objekterfassungskriterium erfüllt, (Mehrfachauswertungsanzahl) auf einen niedrigen Wert gesetzt. Ist das Detektionssicherheitsmaß 22 reduziert, wird diese vorgegebene Anzahl 24 von Abtastzyklen erhöht.

Diese vorgegebene Anzahl 24 von Abtastzyklen korreliert mit der Ansprechzeit 26 des Scanners 10, d.h. mit steigender Anzahl 24 von aufeinanderfolgenden Abtastzyklen erhöht sich auch die Ansprechzeit 26 und umgekehrt.

Zusätzlich oder alternativ zu einer Erhöhung der Mehfachauswertungsanzahl 24 der aufeinanderfolgenden Abtastzyklen kann vorgesehen werden, die Winkelauflösung 28 des Scanners 10 zu erhöhen, so dass sich der Winkelabstand 30 zwischen benachbarten Sendelichtpfaden 14 reziprok zu der Winkelauflösung 28 verringert und umgekehrt.

Schließlich vermindert sich die Reichweite 32 des Scanners 10 (bei vorgegebener gewünschter absoluter Objektauflösung) mit abnehmender Winkelauflösung 28 bzw. zunehmendem Winkelabstand 30.

Fig. 2 soll die Zusammenhänge zwischen den verschiedenen Größen und Parametern lediglich qualitativ illustrieren. Ein quantitativer Zusammenhang zwischen den jeweiligen Werten wird durch Fig. 2 nicht repräsentiert.

### Bezugszeichenliste

- 10: Scanner
- 12: Schutzfeld
- 14: Lichtpfad
- 16: Sendelichtstrahl
- 18: Objekt
- 20: Häufigkeit von Empfangssignalen
- 22: Detektionssicherheitsmaß
- 24: vorgegebene Anzahl von aufeinanderfolgenden Abtastzyklen
- 26: Ansprechzeit
- 28: Winkelauflösung
- 30: Winkelabstand
- 32: Reichweite

## Patentansprüche

1. Verfahren zum Betreiben eines Scanners, insbesondere eines Laserscanners, zur Überwachung eines zumindest zweidimensionalen Schutzfeldes, welches in mehrere zyklisch abtastbare Überwachungsfelder unterteilt ist, wobei der Scanner zumindest einen Lichtsender und zumindest einen Lichtempfänger umfasst, mit den Schritten:
- Aussenden von Sendelichtstrahlen in das Schutzfeld durch den Lichtsender,
- Empfangen von Licht, welches von einem gegebenenfalls in dem Schutzfeld vorhandenen Objekt reflektiert oder remittiert wird, durch den Lichtempfänger,
- Erzeugen eines Empfangssignals für das jeweilige Überwachungsfeld auf der Grundlage des empfangenen Lichts, wobei innerhalb eines Abtastzyklus alle Überwachungsfelder des Schutzfeldes einmal abgetastet werden,
- Ermitteln einer Häufigkeit, mit welcher Empfangssignale erzeugt werden, und
- Ermitteln eines Detektionssicherheitsmaßes zumindest auf der Grundlage der Häufigkeit, wobei das Detektionssicherheitsmaß ein quantifizierendes Maß für die Umgebungsbedingungen darstellt, unter denen der Scanner betrieben wird, und wobei der Wert des Detektionssicherheitsmaßes mit sinkender Häufigkeit erhöht wird und mit steigender Häufigkeit verringert wird,
- wobei auf der Grundlage der über eine vorgegebene Mehrfachauswertungsanzahl von aufeinanderfolgenden Abtastzyklen erzeugten Empfangssignale ermittelt wird, ob ein erfasstes Objekt zumindest ein vorgegebenes Objekterfassungskriterium für ein unzulässiges Objekt erfüllt, und ein Objekterfassungssignal erzeugt wird, wenn das Objekterfassungskriterium erfüllt ist, wobei die vorgegebene Mehrfachauswertungsanzahl von aufeinanderfolgenden Abtastzyklen zumindest auf der Grundlage des Detektionssicherheitsmaßes bestimmt wird, wobei das Objekterfassungskriterium umfasst, dass für die vorgegebene Mehrfachauswertungsanzahl von aufeinanderfolgenden Abtastzyklen festgestellt wird, dass zumindest ein erfasstes Objekt eine vorgegebene Mindestgröße aufweist und/oder sich insbesondere stationär in zumindest einem der Überwachungsfelder befindet, und wobei die vorgegebene Mehrfachauswertungsanzahl von aufeinanderfolgenden Abtastzyklen erhöht wird, wenn sich das Detektionssicherheitsmaß verringert, und/oder die vorgegebene Mehrfachauswertungsanzahl von aufeinanderfolgenden Abtastzyklen verringert wird, wenn sich das Detektionssicherheitsmaß erhöht, und/oder
- wobei der Scanner eine drehbare Lichtablenkeinheit zur Ablenkung des Lichtes der Lichtquelle in das Schutzfeld aufweist und zur Überwachung von einer oder mehreren Abtastflächen ausgelegt ist, wobei die Überwachungsfelder sektorförmig sind, und wobei die Größe der Winkelauflösung, mit welcher das Schutzfeld abgetastet wird, in Abhängigkeit von dem Detektionssicherheitsmaß einstellbar ist, wobei die Winkelauflösung verringert wird, wenn sich das Detektionssicherheitsmaß erhöht, und/oder die Winkelauflösung erhöht wird, wenn sich das Detektionssicherheitsmaß verringert.

2. Verfahren nach Anspruch 1,
wobei auf der Grundlage des Detektionssicherheitsmaßes ein erstes Signal an einem Signalausgang des Scanners ausgegeben wird.

3. Verfahren nach einem der vorhergehenden Ansprüche,
wobei das Ermitteln der Häufigkeit, mit welcher Empfangssignale erzeugt werden, und das Ermitteln des Detektionssicherheitsmaßes auf der Grundlage der Häufigkeit umfassen,
dass für eine vorgegebene Anzahl von abgetasteten Überwachungsfeldern oder für einen vorgegebenen Zeitraum die Anzahl von registrierten Empfangssignalen ermittelt wird, und
dass das Detektionssicherheitsmaß auf der Grundlage der ermittelten Anzahl von registrierten Empfangssignalen auf einen vorgegebenen Wert gesetzt wird.

4. Verfahren nach einem der vorhergehenden Ansprüche,
wobei ein jeweiliges Empfangssignal Informationen über die Winkelposition des Überwachungsfeldes und/oder über den Abstand eines darin befindlichen Objekts von dem Scanner umfasst.

5. Verfahren nach einem der vorhergehenden Ansprüche,
wobei die Größe eines erfassten Objekts dadurch ermittelt wird, dass die Größe eines Winkelbereichs, über den sich das jeweilige Objekt erstreckt, auf der Grundlage der Anzahl benachbarter Überwachungsfelder, bei denen die Anwesenheit eines Objekts bei im Wesentlichen dem gleichen Abstand von dem Scanner festgestellt wurde, und deren Winkelabstände sowie dem ermittelten Abstand des Objekts von dem Scanner ermittelt wird.

6. Verfahren nach einem der vorhergehenden Ansprüche,
wobei das Erhöhen und/oder das Vermindern des Wertes des Detektionssicherheitsmaßes bei einer Änderung der Häufigkeit mit zeitlicher Verzögerung erfolgen.

7. Verfahren nach einem der vorhergehenden Ansprüche,
wobei für das Ermitteln des Detektionssicherheitsmaßes auch solche Empfangssignale berücksichtigt werden, die nicht auf ein in dem Schutzfeld vorhandenes Objekt zurückzuführen sind.

8. Scanner (10) zur Überwachung eines zumindest zweidimensionalen Schutzfeldes (12), welches in mehrere zyklisch abtastbare, sektorförmige Überwachungsfelder unterteilt ist, wobei der Scanner (10) zumindest einen Lichtsender, zumindest einen Lichtempfänger, eine drehbare Lichtablenkeinheit zur Ablenkung des Lichtes der Lichtquelle in das Schutzfeld und eine Steuereinheit umfasst, und wobei die Steuereinheit zum Durchführen des Verfahrens gemäß einem der vorhergehenden Ansprüche ausgelegt ist.

9. Scanner nach Anspruch 8, insbesondere Laserscanner, welcher zur Überwachung von einer oder mehreren Abtastflächen ausgelegt ist.

## Claims

1. A method of operating a scanner, in particular a laser scanner, for monitoring an at least two-dimensional protected field which is divided into a plurality of cyclically scannable monitored fields, wherein the scanner comprises at least one light transmitter and at least one light receiver, comprising the steps:
- transmitting transmitted light beams into the protected field by the light transmitter;
- receiving light which is reflected or remitted by an object which may be present in the protected field by the light receiver;
- generating a received signal for the respective monitored field on the basis of the received light, with all the monitored fields of the protected field being scanned once within a scanning cycle;
- determining a frequency of occurrence at which received signals are generated; and
- determining a degree of detection safety at least on the basis of the frequency of occurrence, with the degree of detection safety representing a quantifying measure for the environmental conditions under which the scanner is operated, and with the value of the degree of detection safety being increased as the frequency of occurrence falls and being decreased as the frequency of occurrence rises,
- wherein a determination is made on the basis of the received signals generated over a predefined number of multiple evaluations of consecutive scanning cycles whether a detected object satisfies at least one predefined object detection criterion for an unauthorized object and an object detection signal is generated when the object detection criterion is satisfied, with the predefined number of multiple evaluations of consecutive scanning cycles being determined at least on the basis of the degree of detection safety, with the object detection criterion comprising that a determination is made for the predefined number of multiple evaluations of consecutive scanning cycles that at least one detected object has a predefined minimum size and/or is in particular stationary in at least one of the monitored fields, and with the predefined number of multiple evaluations of consecutive scanning signals being increased when the degree of detection safety is decreased and/or the predefined number of multiple evaluations of consecutive scanning cycles being decreased when the degree of detection safety is increased; and/or
- wherein the scanner has a rotatable light deflection unit for deflecting the light of the light source into the protected field and is configured for monitoring one or more scanning areas, with the monitored fields being of sector shape, with the magnitude of the angular resolution at which the protected field is scanned being adjustable in dependence on the degree of detection safety, and with the angular resolution being decreased when the degree of detection safety is increased and/or the angular resolution being increased when the degree of detection safety is decreased.

2. A method in accordance with claim 1,
wherein a first signal is output to a signal output of the scanner on the basis of the degree of detection safety.

3. A method in accordance with one of the preceding claims,
wherein the determination of the frequency of occurrence at which received signals are generated and the determination of the degree of detection safety on the basis of the frequency of occurrence comprise that the number of registered received signals is determined for a predefined number of scanned monitored fields or for a predefined period of time; and the degree of detection safety is set to a predefined value on the basis of the determined number of registered received signals.

4. A method in accordance with any one of the preceding claims,
wherein a respective received signal comprises information on the angular position of the monitored field and/or on the distance of an object located therein from the scanner.

5. A method in accordance with any one of the preceding claims,
wherein the size of a detected object is determined in that the magnitude of an angular range over which the respective object extends is determined on the basis of the number of adjacent monitored fields in which the presence of an object was determined at substantially the same distance from the scanner and whose angular spacings and the determined distance of the object from the scanner are determined.

6. A method in accordance with any one of the preceding claims,
wherein the increasing and/or the decreasing of the value of the degree of detection safety takes/take place with a time delay on a change of the frequency of occurrence.

7. A method in accordance with any one of the preceding claims,
wherein those received signals are also taken into account for the determination of the degree of detection safety that are not due to an object present in the protected field.

8. A scanner (10) for monitoring an at least two-dimensional protected field (12) which is divided into a plurality of cyclically scannable monitored fields of sector shape, wherein the scanner (10) comprises at least one light transmitter, at least one light receiver, a rotatable light deflection unit for deflecting the light of the light source into the protected field and a control unit; and wherein the control unit is configured for carrying out the method in accordance with any one of the preceding claims.

9. A scanner in accordance with claim 8, in particular a laser scanner, which is configured for monitoring one or more scanning areas.

## Revendications

1. Procédé de fonctionnement d'un scanneur, en particulier d'un scanneur laser, pour la surveillance d'un champ de protection au moins bidimensionnel qui est subdivisé en plusieurs champs de surveillance cycliquement balayables, le scanneur comportant au moins un émetteur de lumière et au moins un récepteur de lumière, comprenant les étapes consistant à :
- émettre des faisceaux lumineux d'émission jusque dans le champ de protection par l'émetteur de lumière,
- recevoir la lumière, réfléchie ou réémise par un objet éventuellement présent dans le champ de protection, par le récepteur de lumière,
- générer un signal de réception pour le champ de surveillance respectif sur la base de la lumière reçue, touts les champs de surveillance du champ de protection étant balayés une fois au sein d'un cycle de balayage,
- déterminer une périodicité à laquelle des signaux de réception sont générés, et
- déterminer un niveau de sécurité de détection au moins sur la base de la périodicité, le niveau de sécurité de détection représentant un niveau quantifiant pour les conditions ambiantes dans lesquelles le scanneur fonctionne, et la valeur du niveau de sécurité de détection est augmentée au fur et à mesure de la décroissance de la périodicité et est réduite au fur et à mesure de la croissance de la périodicité,
dans lequel
- sur la base des signaux de réception générés sur un nombre préfini d'évaluation multiple de cycles de balayage successifs, il est déterminé si un objet détecté satisfait au moins un critère prédéfini de détection d'objet pour un objet inadmissible, et un signal de détection d'objet est généré lorsque le critère de détection d'objet est satisfait, et le nombre prédéfini d'évaluation multiple de cycles de balayage successifs est déterminé au moins sur la base du niveau de sécurité de détection, le critère de détection d'objet incluant de constater pour le nombre prédéfini d'évaluation multiple de cycles de balayage successifs qu'au moins un objet détecté présente une taille minimale prédéfinie et/ou se situe en particulier de façon stationnaire dans l'un au moins des champs de surveillance, et le nombre prédéfini d'évaluation multiple de cycles de balayage successifs est augmenté lorsque le niveau de sécurité de détection se réduit, et/ou le nombre prédéfini d'évaluation multiple de cycles de balayage successifs est réduit lorsque le niveau de sécurité de détection augmente,
et/ou
- le scanneur comprend une unité rotative de déviation de lumière pour dévier la lumière de la source lumineuse jusque dans le champ de protection et est conçu pour surveiller une ou plusieurs surfaces à balayer, les champs de surveillance sont en forme de secteur, la taille de la résolution angulaire à laquelle le champ de protection est balayé est réglable en fonction du niveau de sécurité de détection, et la résolution angulaire est réduite lorsque le niveau de sécurité de détection augmente et/ou la résolution angulaire est augmentée lorsque le niveau de sécurité de détection se réduit.

2. Procédé selon la revendication 1,
dans lequel
un premier signal est émis à une sortie de signal du scanneur sur la base du niveau de sécurité de détection.

3. Procédé selon l'une des revendications précédentes,
dans lequel
la détermination de la périodicité à laquelle des signaux de réception sont générés et la détermination du niveau de sécurité de détection sur la base de la périodicité incluent
de déterminer le nombre de signaux de réception enregistrés pour un nombre prédéfini de champs de surveillance balayés ou pour un intervalle temporel prédéfini, et
de mettre à une valeur prédéfinie le niveau de sécurité de détection sur la base du nombre déterminé de signaux de réception enregistrés.

4. Procédé selon l'une des revendications précédentes,
dans lequel
un signal de réception respectif comprend des informations relatives à la position angulaire du champ de surveillance et/ou à la distance d'un objet y présent par rapport au scanneur.

5. Procédé selon l'une des revendications précédentes,
dans lequel
la taille d'un objet détecté est déterminée du fait que taille d'une zone angulaire sur laquelle l'objet respectif s'étend est déterminée sur la base du nombre de champs de surveillance voisins dans lesquels la présence d'un objet a été constatée à une distance sensiblement identique par rapport au scanneur, et sur la base de leurs distances angulaires ainsi que de la distance déterminée de l'objet par rapport au scanneur.

6. Procédé selon l'une des revendications précédentes,
dans lequel
l'augmentation et/ou la réduction de la valeur du niveau de sécurité de détection s'effectuent avec un retard temporel lors d'une modification de la périodicité.

7. Procédé selon l'une des revendications précédentes,
dans lequel
pour la détermination du niveau de sécurité de détection, également ceux signaux de réception qui ne sont pas dus à un objet présent dans le champ de protection sont pris en compte.

8. Scanneur (10) pour la surveillance d'un champ de protection au moins bidimensionnel (12) qui est subdivisé en plusieurs champs de surveillance cycliquement balayables et en forme de secteur, le scanneur (10) comportant au moins un émetteur de lumière, au moins un récepteur de lumière, une unité rotative de déviation de lumière pour dévier la lumière de la source lumineuse jusque dans le champ de protection et une unité de commande, l'unité de commande étant conçue pour mettre en oeuvre le procédé selon l'une des revendications précédentes.

9. Scanneur selon la revendication 8, en particulier scanneur laser, conçu pour surveiller une ou plusieurs surfaces à balayer.
